(19) Europäisches Patentamt / European Patent Office / Office européen des brevets

(11) **EP 4 312 386 A1**

(12) **EUROPEAN PATENT APPLICATION**

(43) Date of publication:
**31.01.2024  Bulletin 2024/05**

(21) Application number: **22187966.1**

(22) Date of filing: **29.07.2022**

(51) International Patent Classification (IPC):
**H04B 7/06** $^{(2006.01)}$      **H04B 7/08** $^{(2006.01)}$

(52) Cooperative Patent Classification (CPC):
**H04B 7/0608; H04B 7/0691; H04B 7/0874;**
H04B 7/0695; H04B 7/088; H04B 7/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **CAPORAL DEL BARRIO, Samantha**
**9220 Aalborg (DK)**

• **DHERE, Amol**
**9220 Aalborg (DK)**
• **ROM, Christian**
**9220 Aalborg (DK)**
• **KARIMIDEHKORDI, Ali**
**81541 Munich (DE)**
• **SVENDSEN, Simon**
**9220 Aalborg (DK)**

(74) Representative: **Swindell & Pearson Limited**
**48 Friar Gate**
**Derby DE1 1GY (GB)**

(54) **AN APPARATUS, METHOD, COMPUTER PROGRAM FOR BEAM-FORMED COMMUNICATION**

(57)    An apparatus comprising:
means for obtaining a measured power loss in at least a first channel; means for, in dependence upon the measured power loss, determining to increase, decrease, or maintain a number of antenna elements used for beam-formed communication via the first channel; and means for, in dependence upon the determination, changing the number of antenna elements used for beam-formed communication via the first channel.

FIG 2

EP 4 312 386 A1

**Description**

TECHNOLOGICAL FIELD

Examples of the disclosure relate to beam-formed communication. Some relate to beam-forming for communication at a user equipment.

BACKGROUND

Beam-formed communication describes radio communication using a beam. A beam is a spatially constrained channel. The beam has directivity which is the direction of maximum gain for the spatially constrained channel.

A beam can be formed, in transmission, by weighting a signal applied to each antenna element used for transmission with a phasor represented by an amplitude and phase. The amplitude and phases are chosen for each antenna element to obtain constructive interference along the directivity. The antenna elements are often arranged in a regular array. An equivalent approach can be used in reception, according to the theorem of reciprocity.

In radio communications, especially spatially controlled communications such as cellular communication and/or beam-formed communication, it is desirable to prevent transmitters from 'shouting' outside their space and prevent receivers from being too sensitive and listening outside their space. It is therefore desirable to control the gain of transmitters and receivers. In beam-formed communication this is performed by adapting the amplitude of the phasors used for weighting.

BRIEF SUMMARY

According to various, but not necessarily all, examples there is provided an apparatus comprising:

> means for obtaining a measured power loss in at least a first channel;
> means for, in dependence upon the measured power loss, determining to increase, decrease, or maintain a number of antenna elements used for beam-formed communication via the first channel; and
> means for, in dependence upon the determination, changing the number of antenna elements used for beam-formed communication via the first channel.

In some but not necessarily all examples, the means for obtaining a measured power loss in at least a first channel comprises:

> means for obtaining a measured power loss of at least a channel of a set of four simultaneous multiple-input multiple-output (MIMO) channels, where
> a first channel has a first directionality and a first polarization,
> a second channel has the first directionality and a second polarization orthogonal to the first polarization,
> a third channel has the first polarization and a second directionality different to the first directionality and
> a fourth channel has the second polarization and the second directionality,
> wherein the four simultaneous channels simultaneously multiplex four data streams as four MIMO layers;
> wherein the means for, in dependence upon the measured power loss, determining to increase, decrease, or maintain a number of antenna elements used for beam-formed communication via the first channel comprises:
>
>> means for, in dependence upon the measured power loss, determining to redistribute antenna elements of an antenna panel between a set of four groups comprising:
>> a first group of antenna elements used to form a beam of the first directionality and the first polarization for the first channel,
>> a second group of antenna elements used to form a beam of the first directionality and the second polarization for the second channel,
>> a third group of antenna elements used to form a beam of the second directionality and the first polarization for the third channel,
>> a fourth group of antenna elements used to form a beam of the second directionality and the second polarization for the fourth channel;
>> and wherein the means for, in dependence upon the determination, changing the number of antenna elements used for beam-formed communication via the first channel comprises:
>> means for, in dependence upon the determination, redistributing antenna elements of the antenna panel between the set of four groups comprising:

the first group of antenna elements used to form a beam of the first directionality and the first polarization for the first channel,

the second group of antenna elements used to form a beam of the first directionality and the second polarization for the second channel,

the third group of antenna elements used to form a beam of the second directionality and the first polarization for the third channel,

the fourth group of antenna elements used to form a beam of the second directionality and the second polarization for the fourth channel.

In some but not necessarily all examples, the means for, in dependence upon the measured power loss, determining to increase, decrease, or maintain a number of antenna elements used for beam-formed communication via the first channel comprises:

means for, in dependence upon the channel measurement, determining to selectively increase the number of antenna elements used for beam-formed communication using at least the first channel to an increased number;

wherein the means for, in dependence upon the determination, changing the number of antenna elements used for beam-formed communication via the first channel comprises:

means for, in dependence upon the determination, selectively increasing the number of antenna elements used for beam-formed communication via the first channel to the increased number.

In some but not necessarily all examples, the means for, in dependence upon the measured power loss, determining to increase, decrease, or maintain a number of antenna elements used for beam-formed communication via the first channel comprises:

means for, in dependence upon the channel measurement indicating that the power loss of the first channel exceeds a threshold, determining to increase the number of antenna elements used for beam-formed communication via the first channel.

In some but not necessarily all examples, the means for, in dependence upon the determination, changing the number of antenna elements used for beam-formed communication via the first channel comprises:

means for redistribution of antenna elements between at least a group used for beam-formed communication via the first channel and a group used for simultaneous beam-formed communication via at least a second channel,

to maintain communication via at least the first channel and at least the second channel and/or

to reduce a difference between reception power for the first channel and the second channel.

In some but not necessarily all examples, the means for, in dependence upon the determination, changing the number of antenna elements used for beam-formed communication via the first channel comprises:

means for redistribution of antenna elements between N groups used for multiple-input multiple-output (MIMO) beam-formed communication, to maintain the N multiple outputs (MO) for MIMO and/or

reduce a maximum difference between reception power for N multiple outputs for MIMO.

In some but not necessarily all examples, the means for, in dependence upon the determination, changing the number of antenna elements used for beam-formed communication via the first channel comprises:

means for redistribution of antenna elements between at least a group used for beam-formed communication via the first channel and a second group used for beam-formed communication via a second channel,

wherein one or more antenna elements in the group used for beam-formed communication via the second channel, are removed from that group and used in the group for give simultaneous beam-formed communication via the first channel.

In some but not necessarily all examples, the apparatus is configured such that the communication power for the first channel increases as a consequence of increasing the number of antenna elements used for beam-forming when communicating using at least the first channel and

communication power for the second channel decreases as a consequence of increasing the number of antenna elements used for beam-forming when communicating using at least the first channel.

In some but not necessarily all examples, the first channel is a first downlink channel and the second channel is a second downlink channel, and the apparatus comprises:

means for measuring power loss of the first downlink channel;
means for measuring power loss of the second downlink channel;

wherein the means for, in dependence upon the measured power loss, determining to increase, decrease, or maintain a number of antenna elements used for beam-formed communication via the first channel comprises:
the means for determining before increasing or decreasing the number of antenna elements used for beam-formed communication via the first channel that reception power of the first downlink channel is less than the reception power of second downlink channel by a threshold value.

In some but not necessarily all examples, the means for determining an increase or decrease in the number of antenna elements used for beam-formed communication via the first channel reduces a difference between reception power for the first downlink channel and the second downlink channel.

In some but not necessarily all examples, the means for changing the number of antenna elements used for beam-formed communication via the first channel is configured to reconfigure a spatial filter provided by a group of antenna elements for beam-formed communication via the first channel, wherein the group of antenna elements does not comprise one or more antenna elements before changing the number of antenna elements used for beam-formed communication via the first channel that it comprises after changing the number of antenna elements used for beam-formed communication via the first channel and/or

comprising means for changing a number of antenna elements used for beam-formed communication via the second channel configured to reconfigure a spatial filter provided by a group of antenna elements for beam-formed communication via the second channel, wherein the group of antenna elements does comprise one or more antenna elements before changing the number of antenna elements used for beam-formed communication via the first channel that it does not comprise after changing the number of antenna elements used for beam-formed communication via the first channel.

In some but not necessarily all examples, reconfiguring the spatial filter changes an angle of beam-forming for first channel, and/or changes an angle of beam-forming for the second channel.

In some but not necessarily all examples, the apparatus comprises:
means for evaluating the changed number of antenna elements used for beam-formed communication using at least the first channel using a downlink signal.

According to various, but not necessarily all, examples there is provided a method comprising:

determining, in dependence upon a measured power loss, to increase, decrease, or maintain a number of antenna elements used for beam-formed communication via a first channel; and
in dependence upon the determination, changing the number of antenna elements used for beam-formed communication via the first channel.

According to various, but not necessarily all, examples there is provided a computer program comprising code that when run by one or more processors, enables determining, in dependence upon a measured power loss, to increase, decrease, or maintain a number of antenna elements used for beam-formed communication via a first channel; and
in dependence upon the determination, changing the number of antenna elements used for beam-formed communication via the first channel.

According to various, but not necessarily all, examples there is provided a user equipment comprising:

means for measuring power loss of at least a channel of a set of four simultaneous multiple-input multiple-output (MIIMO) channels, where

a first channel has a first directionality and a first polarization,
a second channel has the first directionality and a second polarization orthogonal to the first polarization,
a third channel has the first polarization and a second directionality different to the first directionality and
a fourth channel has the second polarization and the second directionality,

wherein the four simultaneous channels simultaneously multiplex four data streams as four MIMO layers;
means for, in dependence upon the measurement, determining to
redistribute -antenna elements of an antenna panel between a set of four groups comprising:

a first group of antenna elements used to form a beam of the first directionality and
the first polarization for the first channel,
a second group of antenna elements used to form a beam of the first directionality and the second polarization for the second channel,
a third group of antenna elements used to form a beam of the second directionality and the first polarization for the third channel,
a fourth group of antenna elements used to form a beam of the second directionality and the second polarization for the fourth channel;

means for, in dependence upon the determination,
redistributing antenna elements of the antenna panel between the set of four groups comprising:

the first group of antenna elements used to form a beam of the first directionality and
the first polarization for the first channel,
the second group of antenna elements used to form a beam of the first directionality and the second polarization for the second channel,
the third group of antenna elements used to form a beam of the second directionality and the first polarization for the third channel,
the fourth group of antenna elements used to form a beam of the second directionality and the second polarization for the fourth channel.

According to various, but not necessarily all, examples there is provided examples as claimed in the appended claims.

The following portion of this 'Brief Summary' section, describes various features that may be features of any of the examples described in the foregoing portion of the 'Brief Summary' section. The description of a function should additionally be considered to also disclose any means suitable for performing that function

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG. 1 shows an example of the subject matter described herein;
FIG. 2 shows another example of the subject matter described herein;
FIG. 3A, 3B, 3C shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9A, 9B show another example of the subject matter described herein;
FIG. 10A, 10B show another example of the subject matter described herein;
FIG. 11 shows another example of the subject matter described herein;
FIG. 12 shows another example of the subject matter described herein;
FIG. 13 shows another example of the subject matter described herein;
FIG. 14 shows another example of the subject matter described herein;
FIG. 15 shows another example of the subject matter described herein;
FIG. 16 shows another example of the subject matter described herein;
FIG. 17 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DEFINITIONS & ACRONYMS

Where acronyms are used and not defined, they refer to acronyms as used in the 3GPP Specifications and equivalent terms.

DETAILED DESCRIPTION

In the following description a class (or set) can be referenced using a reference number without a subscript index and an instance of the class (member of the set) can be referenced using a reference number with a particular subscript index.

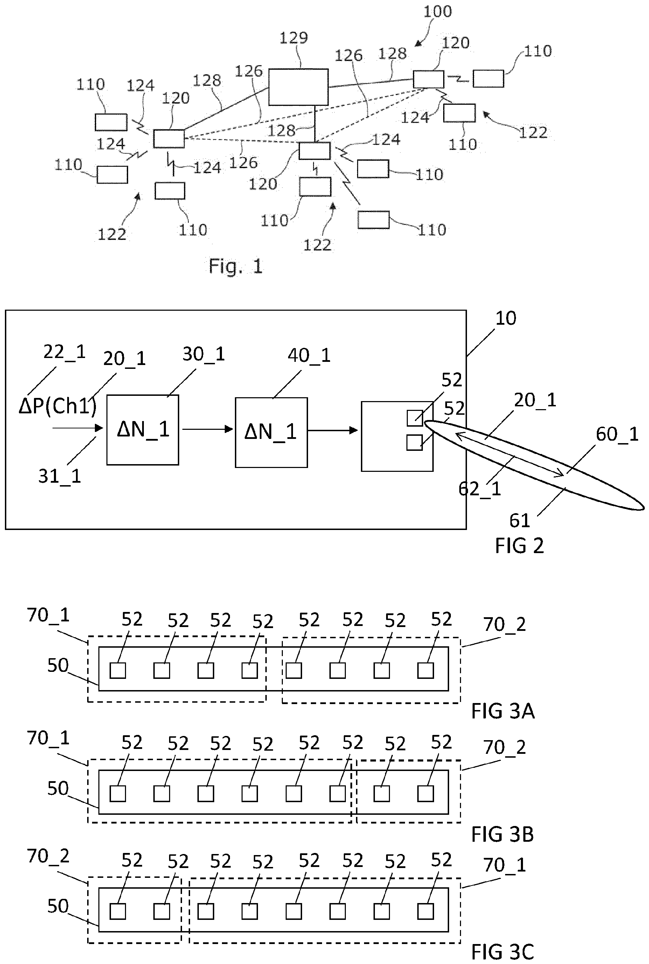

FIG 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The network 100 is in this example a radio telecommunications network, in which at least some of the terminal nodes 110 and access nodes 120 communicate with each other using transmission/reception of radio waves.

The one or more core nodes 129 may, in some examples, communicate with each other. The one or more access nodes 120 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124. The access node 120 is a cellular radio transceiver. The terminal nodes 110 are cellular radio transceivers.

In the example illustrated, but not necessarily all examples, the cellular network 100 is a third generation Partnership Project (3GPP) network in which the terminal nodes 110 are user equipment (UE) and the access nodes 120 are base stations.

In the particular example illustrated the network 100 is an Evolved Universal Terrestrial Radio Access network (E-UTRAN). The E-UTRAN consists of E-UTRAN NodeBs (eNBs) 120, providing the E-UTRA user plane and control plane (RRC) protocol terminations towards the UE 110. The eNBs 120 are interconnected with each other by means of an X2 interface 126. The eNBs are also connected by means of the S1 interface 128 to the Mobility Management Entity (MME) 129.

In other examples the network 100 is a Next Generation (or New Radio, NR) Radio Access network (NG-RAN). The NG-RAN consists of gNodeBs (gNBs) 120, providing the user plane and control plane (RRC) protocol terminations towards the UE 110. The gNBs 120 are interconnected with each other by means of an X2/Xn interface 126. The gNBs are also connected by means of the N2 interface 128 to the Access and Mobility management Function (AMF).

A user equipment comprises a mobile equipment. Where reference is made to user equipment that reference includes and encompasses, wherever possible, a reference to mobile equipment.

FIG 2 illustrates an example of an apparatus 10 for changing the number of antenna elements 52 used for beam-formed communication 60.

The apparatus 10 comprises an interface 31_1 for obtaining a measured power loss 22_1 in at least a first channel 20_1.

The apparatus 10 comprises a decision block 30_1 for determining to increase, decrease, or maintain a number N_1 of antenna elements 52 used for beam-formed communication 60_1 via the first channel 20_1. The decision block 30_1 can be a component of software or a programmed controller or dedicated or programmed circuitry or other suitable means. The decision block 30_1, in dependence upon the measured power loss 22_1, determines to increase, decrease, or maintain a number N_1 of antenna elements 52 used for beam-formed communication 60_1 via the first channel 20_1.

The apparatus 10 comprises a control block 40_1 for changing the number of antenna elements 52 used for beam-formed communication 60_1 via the first channel 20_1. The control block 40_1 can be a component of software or a programmed controller or dedicated or programmed circuitry or other suitable means. The control block 40_1, in dependence upon the determination made by the decision block 30_1, changes the number of antenna elements 52 used for beam-formed communication 60_1 via the first channel 20_1 in accordance with the determination.

In some but not necessarily all examples, the apparatus 10 is a transmitter for the first channel 20_1. In this example, the apparatus can be a user equipment and the first channel 20_1 is an uplink channel, for example, from a user equipment (receiver) to a base station (transmitter).

In some but not necessarily all examples, the apparatus 10 is a receiver for the first channel 20_1. In this example, the apparatus can be a user equipment and the first channel 20_1 is a downlink channel, for example, from a base station (transmitter) to a user equipment (receiver).

In at least some examples, the power loss measured is power loss 22_1 during communication from transmission to reception and is measured at reception.

In at least some examples the apparatus 10 is configured to make the measurement of the power loss 22_1 in the first channel 20_1. In this example, the interface 31_1 can be an output interface of a measurement circuit or similar. If the apparatus 10, is a receiver for the first channel 20_1 then the apparatus 10 is configured to make the measurement of the power loss 22_1 in the first channel 20_1.

If the apparatus 10, is a transmitter for the first channel 20_1 then in at least some examples the apparatus 10 is configured to receive measurement of power loss 22_1 in the first channel 20_1 made by the receiver of the first channel 20_1. In this example, the interface 31_1 can be an output interface of a reception circuit or similar.

In the following description, some examples will be described without reference to whether the first channel 20_1 is an uplink channel or a downlink channel. However, where the channel is an uplink channel, the apparatus 10 is a transmitter and where the first channel 20_1 is a downlink channel the apparatus is a receiver.

In the following description, some examples will be described with reference to a particular scenario, for example, that the apparatus is a user equipment, the first channel 20_1 is a downlink channel and the apparatus is therefore a receiver of the first channel 20_1. It should, however, be appreciated that this is for the purposes of specificity of description. This description explicitly includes adaptations to the particular scenario to be used in other scenarios such as the apparatus is a user equipment, the first channel 20_1 is an uplink channel and the apparatus is therefore a transmitter of the first channel 20_1.

The apparatus 10 can, for example be a terminal node 110, for example a user equipment (UE). A user equipment can be incorporated in different devices and systems. For example, mobile (cellular) telephones, Internet of Things devices, vehicles, robots, autonomous machines...

The apparatus 10 can for example be an access node 120, for example a base station, transmission reception point etc.

The term beam-formed communication is used to connote radio communication using a beam 61. A beam 61 is a spatially constrained channel. The beam 61 has directivity 62 which is the direction of maximum gain for the spatially constrained channel.

A beam 61 can be formed, in transmission, by weighting a signal applied to each antenna element 52 used for transmission with a phasor represented by an amplitude and phase. The amplitude and phases are chosen for each antenna element 52 to obtain constructive interference along the directivity 62. An equivalent approach can be used in reception, according to the theorem of reciprocity.

Thus, an apparatus 10 can use beam-forming for reception. The gain, shape and/or directivity of the reception beam 61 can be controlled.

Thus, an apparatus 10 can use beam-forming for transmission. The gain, shape and/or directivity of the transmission beam 61 can be controlled.

In at least some examples, the apparatus 10 determines to increase the number of antenna elements 52 used for beam-formed communication 60 via the first channel 20_1 in dependence upon the channel measurement indicating that the power loss 22 of the first channel 20_1 exceeds a threshold.

The threshold could be an absolute threshold (e.g., indicative of a loss of rank in a channel matrix) or a relative threshold (for example a drop in condition number for a diagonal channel matrix, or a drop in power per channel).

When the determination is made to increase, decrease, or maintain a number N_1 of antenna elements 52, the antenna elements 52 used can include or not include those previously used. That is, in at least some examples, not only the number of antenna elements used can be controlled but also which antenna elements 52 are used can be controlled.

Thus, in dependence upon the channel measurement, the apparatus 10 can be configured to determine to selectively increase the number of antenna elements 52 used for beam-formed communication 60 using at least the first channel 20_1 to an increased number. Furthermore, in dependence upon that determination, the apparatus is configured to selectively increase the number of antenna elements 52 used for beam-formed communication 60 via the first channel 20_1 to the increased number.

FIG 3A illustrates an example of a plurality of antenna elements 52 used by the apparatus 10.

In this example, but not necessarily all examples, the antenna elements 52 are arranged in an array 50. The illustrated array 50 is a regular array comprising evenly spaced rows and columns of antenna elements 52. In this example, the array 50 is a $1 \times 8$ array. It comprises a single row of eight antenna elements 52. In this example but not necessarily all examples, the antenna elements 52 are evenly spaced.

In other examples the antenna elements 52 are comprised in a different array, for example a differently sized one-dimensional array or a two-dimensional array of N rows and M columns examples include $2 \times 4$ arrays, $4 \times 4$ arrays etc.

In some examples, the antenna elements 52 of the apparatus 10 are comprised in multiple distinct arrays.

An array of antenna elements 52 can be configured as an antenna panel. In at least some examples, an antenna panel is a component comprising multiple antenna elements 52. The component can be a module.

A first group 70_1 of antenna elements 52 are used for beam-formed communication 60_1 via the first channel 20_1. In this example, the antenna elements 52 are adjacent. The number of antenna elements 52 in the first group (N_1) is four in FIG 3A. The number of antenna elements 52 in the first group N_1 has been increased to 6 in FIGs 3B and 3C in dependence upon the measured power loss 22 as previously described.

In FIG 3B, the original 4 antenna elements 52 are augmented by adding two adjacent antenna elements 52.

In FIG 3C, the original 4 antenna elements 52 are replaced using six adjacent antenna elements 52.

In some examples, an antenna element 52 is configured to operate with a specific polarization.

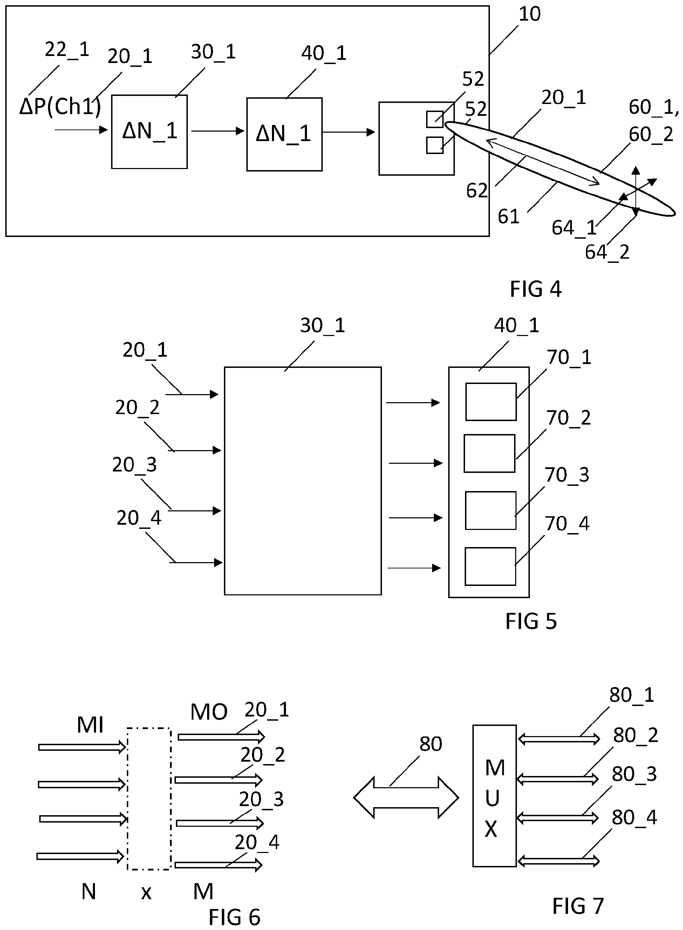

It is common in radio communications to split a single physical channel into two different polarization channels that use orthogonal polarizations and can therefore be modulated/transmitted independently and received/ demodulated independently. One of the orthogonal polarizations is often referred to as vertical V and the other as horizontal H. It is possible to have independent beams for the different polarizations. It is also possible to use a same or similar beam for both polarizations. This example is illustrated in FIG 4. FIG 4 is similar to FIG 2 and similar features are referenced using similar references. In FIG 4, the beam-formed communication 60_1, 60_2 is via two different polarization channels 64_1, 64_2 that use beams 61 that have the same directivity 62.

In some examples, an antenna element 52 used for one polarization is co-located with an antenna element 52 used for another polarization. In this example, it is possible for a common beam to be used for both polarizations. In this scenario the group 70_1 of antenna elements used for beam-formed communication 60_1 using the polarization 64_1 and the group 70_2 of antenna elements 52 used for beam-formed communication 60_2 using the polarization 64_2 have the same number of antenna elements 52 and form the same beam 61.

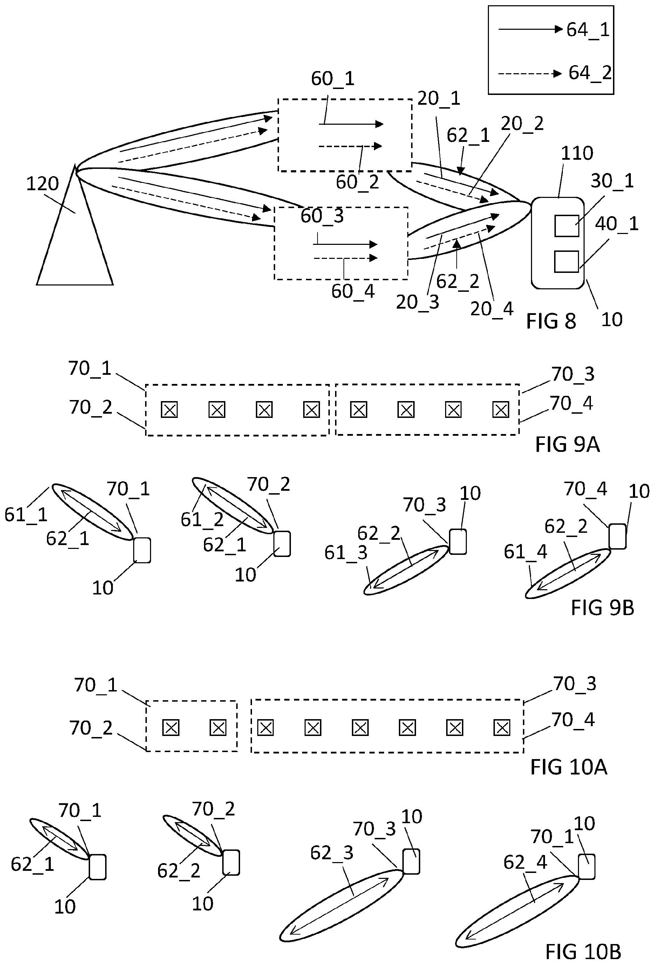

This example can be extended to examples where multiple independent beams are used for beam-formed communication. For example, FIG 8 illustrates an example similar to FIG 4 where a first common beam is used for beam-formed communication of both different polarization-separated channels. However, in this example, a second different common beam is used for beam-formed communication of both different polarization-separated channels. The second beam has different directivity than the first beam.

FIG 5 illustrates a generic example of the apparatus 10 in which there are multiple channels and each channel 20_i is associated with a group 70_i of antenna elements 52 (not illustrated) for beam-formed communication (not illustrated).

The groups 70_i are illustrated as logical entities within the control block 40_1. The groups 70_i of antenna elements 52 are exclusive sets for the purpose of simultaneous communication. An antenna element 52 can only be in one group 70_i.

The decision block 30_1, in dependence upon the measured power loss 22_i in a channel 20_i , determines to increase, decrease, or maintain a number of antenna elements 52 in the group 70_i used for beam-formed communication 60_i (not illustrated) via the channel 20_i.

The apparatus 10 comprises a control block 40_1 for changing the number of antenna elements 52 used for beam-formed communication 60_i via a channel 20_i. The control block 40_1 can be a component of software or a programmed controller or dedicated or programmed circuitry or other suitable means. The control block 40_1, in dependence upon the determination made by the decision block 30_1, changes the number of antenna elements 52 in the group 70_i in accordance with the determination. The new group 70_i of antenna elements 52 is used for beam-formed communication 60_i via the channel 20_i.

As will be described below the control block 40_1 can control the number of antenna elements assigned to each of the groups 70_i. It is possible for the number of antenna elements 52 assigned to one or more groups 70 to be increased and for the number of antenna elements assigned to one or more groups to be decreased and for the number of antenna elements assigned to one or more groups to remain the same.

The distribution and redistribution of antenna elements 52 between groups can be determined, in dependence on the set of power loss measurements 22_i for the set of channels 20_i to find a globally optimum distribution that minimizes a cost function. The cost function can for example be designed to maintain a maximum number of channels in operation (e.g. maintain the rank of the channel diagonal matrix). The cost function can for example be designed to prevent excessive differences between received power for the channels (e.g. maintain the condition number of the singular channel matrix below a threshold value).

The cost function can be designed to boost the weakest channel, for example, at the expense of another channel or other channels.

It is therefore possible to have multiple channels that are used for beam-formed simultaneous communication 60. The beams 61 used for beam-formed communication are controlled by different groups of different antenna elements.

It is possible for antenna elements to be co-located, for example, to achieve a common beam for different polarization channels.

It is possible for one group 70 of antenna elements 52 to be linked to another group 70 of antenna elements 22 such that when the number of one group changes the number in the linked group also changes. This can for example achieve maintenance of common characteristics of beams used for different channels such as power, directivity, radiation pattern shape and can also be used to maintain a common beam for polarization-separated channels.

In at least some examples, the user equipment 10 comprises means for, in dependence upon the measurement of power loss in one or more channels, redistributing antenna elements 52 of an antenna panel 50 between a set of four groups 70 of antenna elements 52 comprising:

a first group 70_1 of antenna elements 52 used to form a beam 61_1 of a first directionality 62_1 and a first polarization 64_1 for the first channel 20_1,

a second group 70_2 of antenna elements 52 used to form a beam 61_2 of the first directionality 62_1 and a second polarization 64_2 for the second channel 20_2,

a third group 70_3 of antenna elements 52 used to form a beam 61_3 of the second directionality 62_2 and the first polarization 64_1 for the third channel 20_3,

a fourth group 70_4 of antenna elements 52 used to form a beam 61_4 of the second directionality 62_2 and the second polarization 64_2 for the fourth channel 20_4.

Referring back to FIG 3A, 3B, 3C, changing the number of antenna elements 52 used for beam-formed communication 60 via the first channel 20_1 can, for example, comprise redistribution of antenna elements 52 between at least a group 70_1 used for beam-formed communication 60 via the first channel 20_1 and a group 70_2 used for simultaneous beam-formed communication 60_2 via at least a second channel 20_2 (illustrated in FIG 5 and 8).

The redistribution can be used to maintain reception via at least the first channel 20_1 and at least the second channel 20_1. This maintains rank of the singular channel matrix.

Additionally, or alternatively, the redistribution can be used to reduce a difference between reception power for the first channel 20_1 and the second channel 20_2. This reduces the condition number of the singular channel matrix.

The redistribution of antenna elements 52 between multiple groups 70 used for beam-formed communication 60 in multiple channels 20 can therefore maintain the multiple downlink channels and/or reduces a maximum difference between reception power for the multiple downlink channels.

The redistribution of antenna elements 52 between groups 70 used for beam-formed communication can maintain a rank of a channel matrix, for example as reported by the user equipment and/or maintain the channel matrix as well conditioned for its rank having a condition number below a threshold.

The redistribution of antenna elements between groups 70 in response to the measured power loss 22, can be used to maintain rank as previously reported by the user equipment to the network (or maximize rank with a given channel), despite asymmetric attenuation of the channels 20 that causes the first channel 20_1 to have a significant increase in attenuation compared to at least one other channel.

As an example, significant asymmetric attenuation of the channels can be attenuation of more than 4 or 6 dB between two downlink channels. So, the apparatus 10, compensates for asymmetric channel attenuation until the difference between the channels is below or equal to 6 dB. For example, if the imbalance is -90 and -80 dBm (with symmetric UE beams), then the UE can compensate with asymmetric gain by redistribution of antenna elements 52 between groups 70 until the imbalance is -88 dBm and -83 dBm with asymmetric beams such that the difference is within 6 dB. The ideal would be to compensate until there is equal power per channel, but this is constrained by the number of antenna elements 52 available.

Increasing the number of antenna elements 52 used for the first channel from N to N + n, increases the gain of the first channel by $10 \log_{10}( (N+n)/N)$. The gain after is $10 \log_{10} (N+n)$. The gain before is $10 \log_{10}(N)$.

Decreasing the number of antenna elements 52 used for the second channel from M to M- n, decreases the gain of the second channel by $10 \log_{10}( (M-n)/M)$. The gain after is $10 \log_{10} (M-n)$. The gain before is $10 \log_{10}(M)$.

The original power difference ($\Delta P_o$) between the channels before the redistribution of n antenna elements 52 from the M antenna elements of the second channel to the N antenna elements of the first channel (without asymmetric attenuation A) is $10 \log_{10}(M) - 10 \log_{10}(N)$. This will generally be less than a threshold T such as 4 or 6 dB. $\Delta P_o = 10\log_{10}(M) - 10\log_{10}(N) < T$.

The power difference ($\Delta P_A$) between the channels before the redistribution of n antenna elements from the second channel to the first channel with asymmetric attenuation A of the first channel is $10\log_{10}(M) - 10\log_{10}(N) + A$. $\Delta P_A = P_o + A = 10 \log_{10}(M) - 10 \log_{10}(N) +A$

The decision whether or not to make the redistribution can, for example, be made when the relative power difference ($\Delta P_A$) between the first channel and the second channel exceeds the threshold T e.g., 4 or 6dB i.e. $\Delta P_A > T$ => $P_o + A > T$. This occurs when $A > T - P_o$

In other words, the decision to make the change in the number of antenna elements N used for the first channel can, for example, be made when the power loss in the first channel (A) is such that the difference between the first channel and the second channel, with asymmetric attenuation of the first channel ($\Delta P_A$), exceeds the threshold T e.g., 6dB.

This occurs when the power loss (the attenuation A) in the first channel exceeds a second threshold T2. The second threshold is the original threshold T minus the original power difference ($\Delta P_o$) i.e., $T2 = T - P_o$. The decision to redistribute antennas occurs when the asymmetric attenuation of the first channel (A) exceeds the gap between the original power difference $P_o$ between the channels before the asymmetric attenuation and the threshold T.

The resultant power difference ($\Delta P_1$) between the channels after redistribution of n antenna elements from the second channel to the first channel with the asymmetric attenuation A of the first channel is $10\log_{10}(M-m) - 10\log_{10}(N+n) + A$. The value of n is selected such that the resultant power difference ($\Delta P_1$) is less than the threshold T

$$\text{i.e., } \Delta P_1 = 10\log_{10}(M-m) - 10\log_{10}(N+m) + A < T$$

$$\Rightarrow 10\log_{10}(M-m) - 10\log_{10}(N+m) + A < T$$

$$\Rightarrow 10\log_{10}[(M-m)/(N+m)] < T - A$$

Solving gives

$$m > [(M-N) \, 10^{[T-A]/10}]/(M+1)$$

Doubling the number of antenna elements 52 gives gain of 3dB at boresight (depends on angle of arrival).

It is obvious to the skilled person how this approach can be generalized to the redistribution of different numbers of antenna elements between any number of groups.

The optimization for X number of groups can be converted into a global optimization, as described above, for each of the X!/[(X-2)!2!] pairs of groups formed from the number of groups. Thus, when X is three, there are three pairs that are globally optimized. When X is four, there are 6 pairs that are globally optimized.

The measurement of power loss (A) for a channel at reception, can be determined by measuring a power parameter such as Reference Signal Received Power (RSRP). The RSRP is measured for each channel.

In at least some examples, the apparatus 10 comprises means for redistribution of antenna elements 52 between at least a group 70_1 used for beam-formed communication 60 via the first channel 20_1 and a group 70_2 used for beam-formed communication 60 via a second channel 20_2, where one or more antenna elements 52 in the group 70_2 used for beam-formed communication 60 via the second channel 20_2, are removed from that group 70_2 and used in the group 70_1 to give simultaneous beam-formed communication 60 via the first channel 20_1. The reception power for the first channel 20_1 increases as a consequence of increasing the number of antenna elements 52 used for beam-forming when communicating using at least the first channel 20_1 to the increased number and the communication power for the second channel 20_2 decreases as a consequence of redistribution.

Where all antenna elements are used, then increasing the number of antenna elements 52 in one group will decrease the number of antenna elements on one or more other groups 70.

In at least some examples, the first channel 20_1 is a first downlink channel and the second channel 20_2 is a second downlink channel and the apparatus 10 comprises means for measuring power loss 22 of the first downlink channel; and means for measuring power loss 22 of the second downlink channel. The apparatus 10 is configured to determine, before increasing (or decreasing) the number of antenna elements 52 used for beam-formed communication 60 via the first channel 20_1 that reception power of the first downlink channel is less than (or more than) the reception power of second downlink channel by a threshold value. Increasing or decreasing the number of antenna elements 52 used for beam-formed communication 60 via the first channel 20_1 can reduce a difference between reception power for the first downlink channel and the second downlink channel and achieve cross-channel power balance.

As illustrated in FIG 6, in at least some examples, the apparatus 10 is configured for multiple input multiple output (MIMO) communication. Where the channels 20_i are downlink channels, the channels represent multiple outputs. Where the channels 20_i are uplink channels, the channels represent multiple inputs.

The apparatus 10 can be configured to redistribute antenna elements 52 between N multiple groups 70_i used for multiple-input multiple-output (MIMO) beam-formed communication 60_i, to maintain the N multiple inputs (MI) for MIMO and/or reduce a maximum difference between reception power for M multiple outputs (MO) for MIMO.

The apparatus 10 can be configured to redistribute antenna elements 52 between M multiple groups 70_i used for multiple-input multiple-output (MIMO) beam-formed communication 60_i, to maintain the M multiple outputs (MO) for MIMO and/or reduce a maximum difference between reception power for N multiple inputs for MIMO.

Thus, an apparatus 10 can maintain N (or M) of NxM MIMO. In some examples N and M are equal.

As illustrated in FIG 7, in some examples, each channel 20_i is used to communicate a different data stream 80_i.

In a transmission scenario, a transmitted primary data stream 80 is multiplexed (split) to form multiple secondary data streams 80_i which are then transmitted via respective channels 20_i.

In a reception scenario, multiple secondary data streams 80_i which are received via respective channels 20_i are demultiplexed (combined) to form a received primary data stream 80.

The term spatial multiplexing describes the allocation of different data streams 80_i to different channels 20_i, for example MIMO channels.

The apparatus 10 can in these examples be configured to redistribute antenna elements 52 between groups 70i used for beam-formed communication 60_i to maintain data streams 60_i (MIMO layers) and/or reduce maximum difference between reception power for data streams 60_i (MIMO layers).

The spatial multiplexing of multiple data streams 80_i and MIMO enables multi-layer MIMO where each MIMO layer can be differentiated by a combination of a spatial directivity 62_1, 62_2 and one of two orthogonal polarizations 64_1, 64_2.

Fig 8 (and FIGs 9A, 9B, 10A, 10B) illustrate an example of an apparatus 10 as previously described. The apparatus 10 in this example is a user equipment.

In this example, the user equipment 10 comprises means for, in dependence upon the measurement of power loss in one or more channels 20, redistributing antenna elements 52 of an antenna panel 50 between a set of four groups 70 of antenna elements 52 comprising:

> a first group 70_1 of antenna elements 52 used to form a beam 61_1 of the first directionality 62_1 and the first polarization 64_1 for the first channel 20_1,
> a second group 70_2 of antenna elements 52 used to form a beam 61_2 of the first directionality 62_1 and the second polarization 64_2 for the second channel 20_2,
> a third group 70_3 of antenna elements 52 used to form a beam 61_3 of the second directionality 62_2 and the first polarization 64_1 for the third channel 20_3,
> a fourth group 70_4 of antenna elements 52 used to form a beam 61_4 of the second directionality 62_2 and the second polarization 64_2 for the fourth channel 20_4;

In this example, the means for obtaining a measured power loss 22_1 in at least a first channel 20_1 comprises: means for obtaining a measured power loss 22 of at least a channel of a set of four simultaneous multiple-input multiple-output (MIMO) channels, where a first channel 20_1 has a first directionality 62_1 and a first polarization 64_1, a second channel 20_2 has the first directionality 62_1 and a second polarization 64_2 orthogonal to the first polarization 64_1, a third channel 20_3 has the first polarization 64_1 and a second directionality 62_2 different to the first directionality 62_1 and a fourth channel 20_4 has the second polarization 64_2 and the second directionality 62_2, wherein the four simultaneous channels simultaneously multiplex four data streams as four MIMO layers.

The means 30_1 for, in dependence upon the measured power loss 22, determining to increase, decrease, or maintain a number N_1 of antenna elements 52 used for beam-formed communication 60 via the first channel 20_1 comprises means for, in dependence upon the measured power loss 22, determining to redistribute antenna elements 52 of an antenna panel 50 between a set of four groups 70 comprising: a first group 70 of antenna elements 52 used to form a beam 61 of the first directionality 62_1 and the first polarization 64_1 for the first channel 20_1, a second group 70 of antenna elements 52 used to form a beam 61 of the first directionality 62_1 and the second polarization 64_2 for the second channel 20_2,
a third group 70 of antenna elements 52 used to form a beam 61 of the second directionality 62_2 and the first polarization 64_1 for the third channel 20_3, a fourth group 70 of antenna elements 52 used to form a beam 61 of the second directionality 62_2 and the second polarization 64_2 for the fourth channel 20_4.

The means 40_1 for, in dependence upon the determination, changing the number of antenna elements 52 used for beam-formed communication 60 via the first channel 20_1 comprises: means for, in dependence upon the determination, redistributing antenna elements 52 of the antenna panel 50 between the set of four groups 70 comprising: the first group 70 of antenna elements 52 used to form a beam 61 of the first directionality 62_1 and the first polarization 64_1 for the first channel 20_1, the second group 70 of antenna elements 52 used to form a beam 61 of the first directionality 62_1 and the second polarization 64_2 for the second channel 20_2, the third group 70 of antenna elements 52 used to form a beam 61 of the second directionality 62_2 and the first polarization 64_1 for the third channel 20_3, the fourth group 70 of antenna elements 52 used to form a beam 61 of the second directionality 62_2 and the second polarization 64_2 for the fourth channel 20_4.

Thus, in at least some examples, the user equipment 10 comprises means for measuring power loss 22 of at least a channel of a set of four simultaneous multiple-input multiple-output (MIIMO) channels. A first channel 20_1 has a first directionality 62_1 and a first polarization 64_1. A second channel 20_2 has the first directionality 62_1 and a second polarization 64_2 orthogonal to the first polarization 64_1, a third channel 20_3 has the first polarization 64_1 and a second directionality 62_2 different to the first directionality 62_1 and a fourth channel 20_4 has the second polarization 64_2 and the second directionality 62_2. The four simultaneous channels simultaneously multiplex four data streams 80_i as four MIMO layers.

The user equipment 10, in this example, comprises means for, in dependence upon the measurement, determining to redistribute antenna elements 52 of an antenna panel 50 between a set of four groups 70 comprising:

> a first group 70_1 of antenna elements 52 used to form a beam 61_1 of the first directionality 62_1 and the first polarization 64_1 for the first channel 20_1,
> a second group 70_2 of antenna elements 52_2 used to form a beam 61_2 of the first directionality 62_1 and the second polarization 64_2 for the second channel 20_2,
> a third group 70_3 of antenna elements 52 used to form a beam 61_3 of the second directionality 62_2 and the first polarization 64_1 for the third channel 20_3,
a fourth group 70_4 of antenna elements 52 used to form a beam 61_4 of the second directionality 62_2 and the second polarization 64_2 for the fourth channel 20_4.

The user equipment 10 comprises means for, in dependence upon the measurement, redistributing antenna elements 52 of the antenna panel 50 between the set of four groups 70 comprising:

the first group 70_1 of antenna elements 52 used to form a beam 61_1 of the first directionality 62_1 and the first polarization 64_1 for the first channel 20_1,
the second group 70_2 of antenna elements 52 used to form a beam 61_2 of the first directionality 62_1 and the second polarization 64_2 for the second channel 20_2, the third group 70_3 of antenna elements 52 used to form a beam 61_3 of the second directionality 62_2 and the first polarization 64_1 for the third channel 20_3, the fourth group 70)4 of antenna elements 52 used to form a beam 61_4 of the second directionality 62_2 and the second polarization 64_2 for the fourth channel 20_4.

In some examples, the number of antenna elements in the first group 70_1 and the number of the antenna elements in the second group 70_2 can be dynamically changed but remain equal. Each one of the antenna elements in the first group 70_1 can be co-located with a respective antenna element in the second group 70_2.

The number of antenna elements in the third group 70_3 and the number of the antenna elements in the fourth group 70_4 can be dynamically changed but remain equal.

The number of antenna elements in the first group 70_1 (second group 70_2) can be different from the number of the antenna elements in the third group 70_3 (fourth group 70_4).

Each one of the antenna elements in the first group 70_1 can be co-located with a respective antenna element in the second group 70_2.

Each one of the antenna elements in the third group 70_3 can be co-located with a respective antenna element in the fourth group 70_4.

The apparatus is configured to control the weights (phasors) associated with each antenna element in a group to control beam formation. This can be described as a spatial filter.

The means for changing the number of antenna elements 52 used for beam-formed communication 60 via the first channel 20_1 can also be configured to reconfigure a spatial filter provided by a group 70 of antenna elements 52 for beam-formed communication 60 via the first channel 20_1, wherein the group 70 of antenna elements 52 *does not* comprise one or more antenna elements 52 *before* changing the number of antenna elements 52 used for beam-formed communication 60 via the first channel 20_1 that it *does* comprise *after* changing the number of antenna elements 52 used for beam-formed communication 60 via the first channel 20_1 and/or

the means for changing a number of antenna elements 52 used for beam-formed communication 60 via the second channel 20_2 can be configured to reconfigure a spatial filter provided by a group 70_2 of antenna elements 52 for beam-formed communication 60_2 via the second channel 20_2, wherein the group 70 of antenna elements 52 *does* comprise one or more antenna elements 52 *before* changing the number of antenna elements 52 used for beam-formed communication 60 via the first channel 20_1 that it *does not* comprise *after* changing the number of antenna elements 52 used for beam-formed communication 60 via the first channel 20_1.

The first group 70 and the second group 70 do not have any antenna elements 52 in common at the same time.

Reconfiguring the spatial filter can change an angle of beam-forming for a channel 20_i. This can afford opportunities to steer to minimize power difference between channels.

Reconfiguring the spatial filter can change a granularity afforded for steering a beam for a channel 20_i. Adding antenna elements increases the granularity.

In this example, four simultaneous MIMO layers are used. Each of four spatially multiplexed parallel data streams 80 are communicated via different simultaneous channels that are separated by a combination of one of two directionalities (two different TCI) and one of two polarizations (four combinations, provide four channels) A single codeword can be used for all channels.

FIG 9A and 9B illustrate the situation before redistribution.

The first group 70_1 of antenna elements 52 used to form a beam 61_1 of the first directionality 62_1 and the first polarization 64_1 for the first channel 20_1 and the second group 70_2 of antenna elements 52 used to form a beam 61_2 of the first directionality 62_1 and the second polarization 64_2 for the second channel 20_2 are a first sub-array of four cross-polarized antenna elements.

The third group 70_3 of antenna elements 52 used to form a beam 61_3 of the second directionality 62_2 and the first polarization 64_1 for the third channel 20_3 and the fourth group 70_4 of antenna elements 52 used to form a beam 61_4 of the second directionality 62_2 and the second polarization 64_2 for the fourth channel 20_4 are a second sub-array of four cross-polarized antenna elements.

FIG 10A and 10B illustrate the situation after redistribution.

The first group 70_1 of antenna elements 52 used to form a beam 61_1 of the first directionality 62_1 and the first polarization 64_1 for the first channel 20_1 and the second group 70_2 of antenna elements 52 used to form a beam 61_2 of the first directionality 62_1 and the second polarization 64_2 for the second channel 20_2 are a first sub-array of two cross-polarized antenna elements. Comparing FIGs 9B and 10B, the gain/size of the antenna beams have decreased as a consequence of the redistribution.

The third group 70_3 of antenna elements 52 used to form a beam 61_3 of the second directionality 62_2 and the first polarization 64_1 for the third channel 20_3 and the fourth group 70_4 of antenna elements 52 used to form a beam 61_4 of the second directionality 62_2 and the second polarization 64_2 for the fourth channel 20_4 are a second sub-array of six cross-polarized antenna elements. Comparing FIGs 9B and 10B, the gain/size of the antenna beams have increased as a consequence of the redistribution.

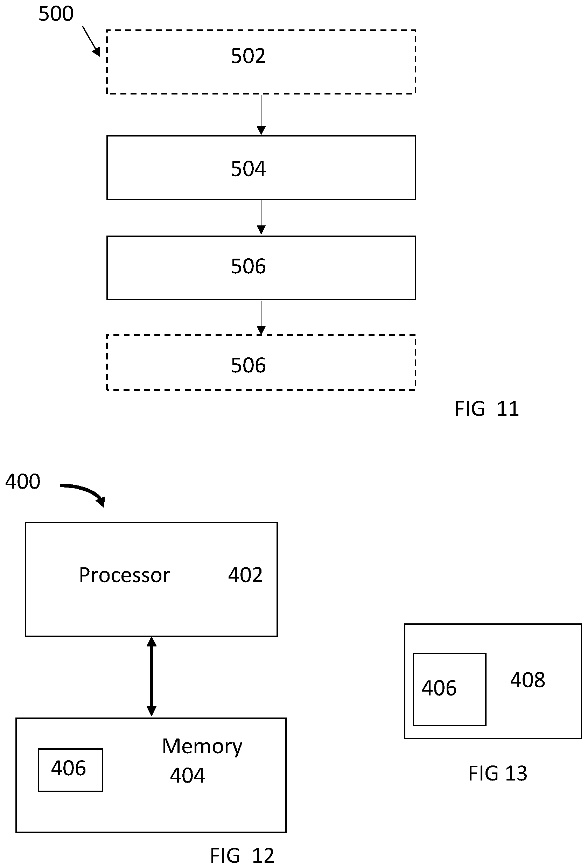

FIG 11 illustrates an example of a method 500 performed at apparatus 10, for example user equipment.

The method 500 comprises, at block 504, determining, in dependence upon a measured power loss 22, to increase, decrease, or maintain a number of antenna elements 52 used for beam-formed communication 60 via a first channel 20_1.

The method 500 comprises, at block 506, in dependence upon the determination, changing the number of antenna elements 52 used for beam-formed communication 60 via the first channel 20_1.

In some examples, the method 500 comprises, at block 502, measuring power loss 22 of at least a channel of a set of four simultaneous multiple-input multiple-output (MIIMO) channels, where

> a first channel 20_1 has a first directionality 62_1 and a first polarization 64_1,
> a second channel 20_2 has the first directionality 62_1 and a second polarization 64_2 orthogonal to the first polarization 64_1,
> a third channel 20_3 has the first polarization 64_1 and a second directionality 62_2 different to the first directionality 62_1 and
> a fourth channel 20_4 has the second polarization 64_2 and the second directionality 62_2,
> wherein the four simultaneous channels simultaneously multiplex four data streams as four MIMO layers.

In this example, the method comprises at block 504, determining, in dependence upon the measurement, to redistribute antenna elements 52 of an antenna panel 50 between a set of four groups 70 comprising:

> a first group 70_1 of antenna elements 52 used to form a beam 61 of the first directionality 62_1 and the first polarization 64_1 for the first channel 20_1,
> a second group 70_2 of antenna elements 52 used to form a beam 61 of the first directionality 62_1 and the second polarization 64_2 for the second channel 20_2,
> a third group 70_3 of antenna elements 52 used to form a beam 61 of the second directionality 62_2 and the first polarization 64_1 for the third channel 20_3,
> a fourth group 70_4 of antenna elements 52 used to form a beam 61 of the second directionality 62_2 and the second polarization 64_2 for the fourth channel 20_4.

In this example, the method comprises at block 506, redistributing, means for, in dependence upon the determination, antenna elements 52 of the antenna panel 50 between the set of four groups 70 comprising:

> the first group 70_1 of antenna elements 52 used to form a beam 61 of the first directionality 62_1 and the first polarization 64_1 for the first channel 20_1,
> the second group 70_2 of antenna elements 52 used to form a beam 61 of the first directionality 62_1 and the second polarization 64_2 for the second channel 20_2, the third group 70_3 of antenna elements 52 used to form a beam 61 of the second directionality 62_2 and the first polarization 64_1 for the third channel 20_3,
> the fourth group 70_4 of antenna elements 52 used to form a beam 61 of the second directionality 62_2 and the second polarization 64_2 for the fourth channel 20_4.

In any of the preceding examples, the apparatus can be configured to evaluate the changed number of antenna elements 52 used for beam-formed communication 60 using at least the first channel 20_1 using power measurement at reception of an evaluation signal.

Where the evaluation is of received power on a downlink channel at a user equipment, the evaluation signal can be a downlink reference signal or a downlink data signal. An example of a reference signal is the channel state information reference signal CSI-RS.

For example, a repeated CSI-RS can be used for evaluation.

In some examples, the user equipment 10 may request repetition of CSI-RS.

The method 500 can therefore optionally comprise block 506 which evaluates the redistributed arrangement of antenna elements within the groups 70_i used for beam-formed communication 60_i via channels 20_i using power measurement at reception of an evaluation signal.

Fig 12 illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

As illustrated in Fig 12 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 10 comprises:

at least one processor 402; and
at least one memory 404 including computer program code
the at least one memory 404 and the computer program code configured to, with the at least one processor 402, cause the apparatus 10 at least to perform:

determining, in dependence upon a measured power loss 22, to increase, decrease,
or maintain a number of antenna elements 52 used for beam-formed communication 60 via a first channel 20_1; and

in dependence upon the determination, changing the number of antenna elements 52 used for beam-formed communication 60 via the first channel 20_1.

The apparatus 10 comprises:

at least one processor 402; and

at least one memory 404 including computer program code,
the at least one memory storing instructions that, when executed by the at least one processor 402, cause the apparatus at least to perform:

determining, in dependence upon a measured power loss 22, to increase, decrease,
or maintain a number of antenna elements 52 used for beam-formed communication 60 via a first channel 20_1; and

in dependence upon the determination, changing the number of antenna elements 52 used for beam-formed communication 60 via the first channel 20_1.

As illustrated in Fig 13, the computer program 406 may arrive at the apparatus 10 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

Computer program instructions for causing an apparatus to perform at least the following or for performing at least the following:

determining, in dependence upon a measured power loss 22, to increase, decrease,
or maintain a number of antenna elements 52 used for beam-formed communication 60 via a first channel 20_1; and
in dependence upon the determination, changing the number of antenna elements 52 used for beam-formed communication 60 via the first channel 20_1.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

A channel matrix **H** comprises channel gain $h_{ij}$ from transmit antenna port $j$ to receive antenna port $i$. Let there be $N_t$ transmit antenna ports and $N_r$ receive antenna ports.

The maximum achievable capacity can be computed by decomposing the channel matrix into a set of parallel, independent scalar channels. **H** has a singular value decomposition:

$$H = U \Lambda V^*$$

where U and V are square matrices of the size of the $N_r$ and Nt respectively and $\Lambda$ is a singular rectangular matrix whose off-diagonal elements are zero.

The diagonal elements $\lambda_1$, $\lambda_2$ ... $\lambda_n$ are the singular values $h_{11}$, $h_{22}$ ... of the matrix **H** and $n = \min(N_t, N_r)$. As such, the rank of **H** is the number of non-zero singular values, i.e. a maximum of $n$. The rank of **H** is the number of spatial degrees of freedom. With full rank, a MIMO channel provides $n$ spatial degrees of freedom.

The squared singular values $\lambda_i^2$ are the eigenvalues. Each non-zero $\lambda_i$ corresponds to an eigenchannel that can support a data stream, such that the MIMO channel supports spatial multiplexing of multiple streams. The number of linearly independent columns (containing non-zero singular values) corresponds to the number of orthogonal channels from each transmit antenna to a receive antenna, in a multipath environment. With $n$ non-zero singular values, the transmitted signal can be received from $n$ different directions.

Besides, the rank of **H**, the non-zero singular values provide a capacity-measure of the channel. The sum of all eigenvalues $\sum_i^k \lambda_i^2$ is the total power gain of the channel matrix when energy is equally spread among Tx (transmit) antennas. As such, $\sum_i^k \lambda_i^2 = \sum_{i,j} |h_{ij}|^2$

The channel capacity at high SNR (signal to noise ratio) regime for a given total power gain, is maximized with equal singular values. At high SNR regime, equal amounts of power on the non-zero eigenchannels results in optimal performance when the transmitted power is equally spread between all transmit antennas, the channel with highest capacity is the one where all the singular values are equal. That is to say, the closer the singular values (i.e. condition number $\frac{\max(\lambda)}{\min(\lambda)} \approx 1$, a "well-conditioned matrix"), the larger the channel capacity in the high SNR regime. It is desirable to achieve high SNR and well conditioning of the matrix.

In high SNR regime and with full rank **H** matrix, **H** is preferably well-conditioned in order to effectively use the maximum rank and yield a high capacity. Even a channel matrix with high rank may not be able to utilize the maximum spatial degrees of freedom if it is ill-conditioned, i.e., large spread among singular values degrade capacity.

In order to fully exploit all the degrees of freedom (rank) that the channel matrix H offers, in high SNR regime, the eigen values must be present (rank maintained) and be of similar values (low condition number), leading to similar or equal power allocation among transmit antennas, and the receive antenna gains must be similar.

With a dual-polarized 1x4 linear array of dual polarized antenna elements, the UE can create a pair of 1x2 arrays for each polarization creating four single-polarized uncorrelated beams with similar gain. With a dual-polarized 1x8 linear array of dual polarized antenna elements, the UE can create a pair of 1x4 arrays for each polarization creating four single-polarized uncorrelated beams with similar gain.

In 3GPP, the UE estimates channel state information (CSI) which includes the rank indicator (RI), the precoding matrix indicator (PMI), and the channel quality indicator (CQI), and feedbacks the CSI to the base station.

UE gets the downlink transmission rank, which is the corresponding number of transmission layers. For single Codeword, the number of RI is 1-4, and for dual Codeword, the number of RI is 1-8.

In a multipath channel with single-codeword transmission supporting rank 4, the well conditioning of the matrix is ensured with spatially different paths and similar power levels on each individual path. However, at mmW (milli meter wave) frequencies, path loss, reflection loss and Rx beam gain dependency on angle of arrival may create significant differences in received power per stream. In such case, the channel matrix may become ill-conditioned and drop rank, thereby not exploiting the number of degrees of freedom available in the MIMO channel.

It is desirable to maintain conditioning of the eigenvalue matrix of the channel matrix H i.e., control the difference between max $(\lambda_i)$ and min $(\lambda_i)$ so that it is minimized or does not exceed a threshold T, in order to exploit full rank and maximize capacity.

The ratio of max $(\lambda_i)$ to min $(\lambda_i)$ is the condition number.

While LNA (low noise amplifier) gain and some demodulation techniques may compensate for some asymmetric loss of received power per stream, in some cases it is not enough, and it is desirable to prevent the UE from dropping a rank.

The UE achieves this by changing its beam pattern, gain and optionally the steering angle to affect the channel matrix H before decoding it. In particular to maintain rank and condition.

In mmW, the UE antenna panel is an array of antenna elements (in order to compensate for path loss). The array can be grouped into sub-arrays (groups 70) to create multiple uncorrelated beams and sustain the diversity offered by the channel, for example, to support spatial multiplexing.

The examples described change the antenna element grouping in the array, in order to re-balance the power across the received streams and avoid losing diversity gain.

Changing the antenna element grouping for reception is actually changing the UE Rx (receive) beam filter (spatial filter) that it sees the channel with, i.e., broader or narrower beam and larger or smaller gain. The re-grouping may be done accordingly to the power imbalance across received streams to compensate for it. In that way, a higher rank can be reported by the UE, thus enhancing spatial multiplexing.

Since the channel values of $h_{ii}$ (diagonal) are directly related to singular values $\lambda_{ii}$, the UE10 can adjust the UE Rx antenna pattern to boost/reduce each $h_{ii}$ according to received power on the dedicated layer $x_i$ in order to equalize the corresponding singular values $\lambda_{ii}$ and maximize capacity. The UE Rx antenna pattern adjustment is done by dynamically re-grouping the antenna elements for each channel evaluation in order to boost the layers received with lower power (i.e., adding antenna elements to increase receive beamforming gain). Consequently, since the number of elements in the UE array is fixed, the layers received with higher power will in turn be received with a decreased gain, i.e., smaller power.

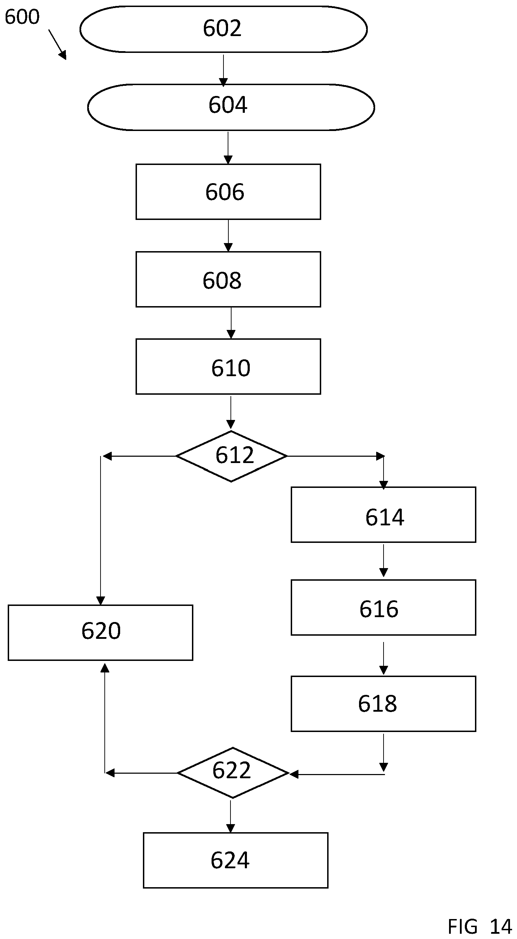

The flow of the UE decision and action is represented in FIGs 14, 15, 16.

FIG 14 illustrates a process 600. The process controls UE reception antenna gain according to power spread across streams to optimize CSI/rank reporting and maximize capacity.

At block 602, the gNB triggers four-layer downlink beam management tracking. For example, the gNB triggers 4-Layer DL beam management/tracking by sending CSI-RS for beam management where the UE can try aligning different UE Rx beams e.g., CSI-RS with repetition "on".

At block 604, the UE receives reference signals for reception beam evaluation, for example, CSI-RS for beam management.

At block 606, the UE advantageously estimates the diagonal elements $h_{ii}$ of the channel matrix H with a baseline (original) UE reception beam. These represent the power of each layer. This may be for example the use of groups 70_i that have the same number of antenna elements (same half power beamwidth pattern and gain).

At block 608, the UE advantageously evaluates a potential of the antenna array for rebalancing. For example, a 1x8 array of dual polarized antenna elements that is evenly grouped can give +2.4 dB gain by regrouping the antenna array from a 1x4 sub-array to a 1x7 sub array ($10\log_{10}(7/4)$). For example, a 1x8 can give +1.8 dB gain by re-grouping from 1x4 to 1x6. This means that depending on the number of elements in the array and the re-grouping possibilities enabled by the UE architecture, the UE can estimate that for example on a 1x8 array, a regrouping from 1x4+1x4 to 1x2+1x6 will provide +1.8 dB on the one side ($10\log_{10}(6/4)$) while decreasing -3 dB on the other side ($10\log_{10}(2/4)$). Further, a regrouping from 1x4+1x4 to 1x1+1x7 may provide +2.4 dB on the one side ($10\log_{10}(7/4)$) and -6 dB on the other side ($10\log_{10}(1/4)$).

At block 610, the UE advantageously compares the difference between diagonal elements $h_{ii}$ of the channel matrix against the rebalancing potential. The UE compares hii for each layer against balancing potential. The UE can evaluate if regrouping can enhance the capacity by balancing the received power per stream.

Advantageously at block 612, if the UE determines that the rebalancing potential is sufficient to compensate for the difference between diagonal elements $h_{ii}$ of the channel matrix then the method branches to block 614 for rebalancing. If the UE determines that the rebalancing potential is insufficient to compensate for the difference between diagonal elements $h_{ii}$ of the channel matrix then the method branches to block 620.

At block 620, the UE keeps the existing grouping of antenna elements and beam setting. There is no change in the number of antenna elements used in a group 70_i. The UE has still the possibility to fall-back to initial symmetrical beams.

Advantageously at block 614, the UE stores the best UE reception beam settings with antenna element re-grouping. The best is typically highest capacity, that is highest rank and lowest condition number.

At block 616, the UE waits until the next reference signal for reception beam evaluation or triggers it i.e., CSI-RS beam for beam management. The UE will check the rank and conditioning of the eigenvalue matrix of the channel matrix with the optimized beam pattern after element regrouping. For that, the UE measures a CSI-RS for beam management and evaluates it. It can wait for next scheduled RS or trigger it.

It is important to note that Steps 606, 608, 610, 612, 614, 616 are done within a single CSI-RS (e.g., 1 symbol) for beam management. The optimized UE Rx beam setting can be determined from a predetermined fixed mapping from the symmetrical grouping of elements to the re-balancing potential of the array (depending on its size and supporting hardware architecture). A second CSI-RS for beam management is used for checking the rank and conditioning after element re-grouping. In case it is not feasible for a UE due to processing load then the UE can utilize more OFDM (orthogonal frequency-division multiplexing) symbols, e.g. more than a single CSI-RS.

At block 618, the UE uses the stored reception beam settings with antenna element regrouping and evaluates whether or not the expected condition number has been obtained or the condition number has improved as a result of regrouping. On the next CSI-RS for beam management, the UE evaluates the condition number with stored best UE Rx beam setting with element regrouping.

If there has been an improvement of matrix conditioning, the process moves to block 624. Here the UE stores the reception beam settings with antenna element regrouping for use in four-layer downlink MIMO.

If there has not been a sufficient improvement, the process branches to block 620 (see above).

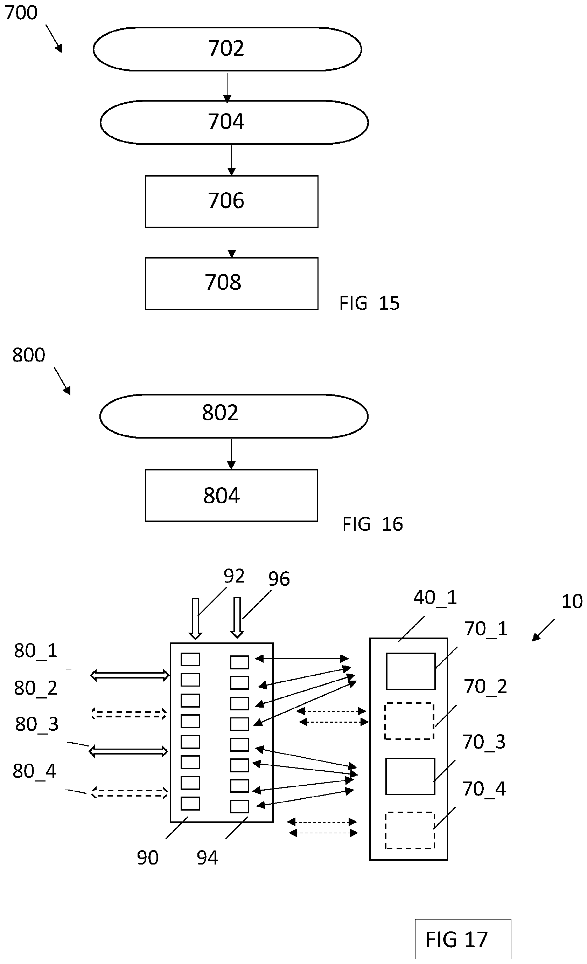

FIG 15 illustrates a process 700. At block 702, the gNB triggers four-layer CSI reporting.

At block 704, the UE receives multiple reference signals for rank evaluation e.g., CSI-RS for CSI.

Advantageously at block 706, the UE uses the best beam from optimization procedure (block 624) for CSI measurement and reporting.

As the rank of the channel matrix has been maintained despite asymmetric attenuation of layers, by regrouping the antenna elements, the UE is still able to maintain and report rank 4. The UE at block 708 reports CSI rank 4.

FIG 16 illustrates a process 800.

At block 802, the gNB sends four-layer PDSCH (physical downlink shared channel). Advantageously at block 804, the UE uses the best beam from the optimization procedure (block 624) for four-layer PDSCH repetition.

The UE dynamically estimates and applies the best analog beam gain per layer autonomously via array dimension re-configuration (i.e., number of antenna elements per UE RX port to dynamically vary the optimum gain per layer) such that it optimizes the radio channel rank to compensate for power imbalance per stream and maximize capacity. The estimation is done on the gNB reference signals and the application is done on the CSI-RS for reporting as well as the PDSCH.

As an example, the baseline behaviour by the UE is to split the 1x8 array into 4 beams/layers using a 1x4 sub-array for both polarizations and a different 1x4 sub-array for both polarizations

As a result, the interstream power imbalance cause the UE to only sustain rank 2 with received signal y1 and y2; instead of exploiting all 4 ranks for spatial multiplexing due to interstream power imbalance.

The channel characterization may be for example initially be as follows:

Table 1

| Received Signal | Measured Signal power | Power imbalance to y1 | Polarization | Beam Directivity & Gain dB | No of single polarized antenna elements |
|---|---|---|---|---|---|
| y1 | -80 dBm | N/A | H | $B1(\theta_1,\phi_1)$ 12 | 4 in group G1 |
| y2 | -80 dBm | 0 dB | V | $B1(\theta_1,\phi_1)$ 12 | 4 in group G1 |
| y3 | -81 dBm | 1 dB | H | $B2(\theta_2,\phi_2)$ 12 | 4 in group G2 |
| y4 | -81 dBm | 1 dB | V | $B2(\theta_2,\phi_2)$ 12 | 4 in group G2 |

Any power imbalance is below a threshold that triggers rebalancing.

There is then an asymmetric attenuation of 4 dBm in the beam B2 relative to the beam B1.

Table 2

| Received Signal | Measured Signal power | Power imbalance to y1 | Polarization | Beam Directivity & Gain dB | No of single polarized antenna elements |
|---|---|---|---|---|---|
| y1 | -80 dBm | N/A | H | $B1(\theta_1,\phi_1)$ 12 | 4 in group G1 |
| y2 | -80 dBm | 0 dB | V | $B1(\theta_1,\phi_1)$ 12 | 4 in group G1 |
| y3 | **-85 dBm** | **5 dB** | H | $B2(\theta_2,\phi_2)$ 12 | 4 in group G2 |
| y4 | **-85 dBm** | **5 dB** | V | $B2(\theta_2,\phi_2)$ 12 | 4 in group G2 |

The power imbalance is now above a threshold that triggers rebalancing.

The interstream power imbalance and conditioning can be compensated for in the analog domain by re-grouping antenna elements into differently sized sub-arrays.

Increasing the number of antenna elements in the group G2 used to form the beam B2 for receiving a stream increases the gain for that stream and decreasing the number of antenna elements in the other group G1 used to form the beam B1 for receiving a different stream decreases the gain for that stream.

In this example, the UE computes a 5 dB interstream power imbalance and knows it can gain 3 dB every time it doubles the number of antenna elements because $10\log_{10}2=3$.

The UE can try different antenna element grouping to re-balance interstream power levels.

After successful UE Rx pattern reconfiguration, the UE can compensate for interstream power imbalance as shown in the table below.

Table 3

| Received Signal | Measured Signal power | Power imbalance to y1 | Pol | Beam Directivity & Gain dB | No of single polarized antenna elements | Δ Gain |
|---|---|---|---|---|---|---|
| y1 | -80**-3** = -83 dBm | N/A | H | B1($\theta_1,\phi_1$) 12**-3** =9 | 2 in group G1 | $\text{Log}_{10}(2/4)$ **- 3 dB** |
| y2 | -80**-3** = -83 dBm | 0 dB | V | B1($\theta_1,\phi_1$) 12**-3**= 9 | 2 in group G1 | $\text{Log}_{10}(2/4)$ **- 3 dB** |
| y3 | -85**+1.8**= **-**83.2 dBm | 5 dB | H | B2($\theta_2,\phi_2$) 12**+1.8 =** 13.8 | 6 in group G2 | $\text{Log}_{10}(6/4)$ **+1.8 dB** |
| y4 | -85**+1.8**= **-**83.2 dBm | 5 dB | V | B2($\theta_2,\phi_2$) 12**+1.8 =** 13.8 | 6 in group G2 | $\text{Log}_{10}(6/4)$ **+1.8dB** |

In the Table 2, the received power varies by up to 5 dB across layers, the UE groups the antenna elements as shown in Table 3 which substantially equalizes the power values.

The signal on layer 1 that was in the legacy solution received with a 12 dB gain is now received with only 9 dB gain. The signal on layer 3 that was received in the legacy solution with 12 dB gain is now received with 13.8 dB gain instead.

The antenna element re-grouping proposed in Table 3 effectively yields substantially equal power level values across the 4-Layer DL MIMO channel.

The interstream power imbalance is re-balanced as shown in Table 3 with signal power values adjusted with the antenna element re-grouping, thus the channel will provide higher capacity.

It should be noted that while affecting the main lobe gain of the UE Rx antenna patterns, the side lobes levels are also changed. However, when the side lobes do not significantly increase cross-correlation nor deteriorate the matrix conditioning, UE can apply the reconfiguration.

Single-TCI reception on different beams has been supported since Rel-15 via the Type I codebook, requiring coherent reception at the UE from at least two directions, which could be achieved with either a single panel or multiple coherent panels. Alternatively, dual TCI operation can work with or without the assumption of coherence at the UE, and can be combined with the Rel-17 mTRP framework even if the base station is actually deployed as a single TRP. Dual TCI operation is therefore the most flexible assumption allowing a variety of actual implementations.

In some examples, the apparatus 10 can adapt the antenna arrays of an UE such that the number of antenna elements of each array is selected to generate different receive (Rx) antenna beams towards the gNB. This creates beams with different beamwidths and/or antenna gains. The different Rx beams are created in response to (or "dependence upon") the Rx signal strength of each received data stream (layer) and if the H matrix (channel) is not optimal (i.e. where diagonals are not balanced) then the adjustment of the number of antenna elements in an array adjusts one or more of the Rx beams to balance the channel matrix H. When the channel matrix H is optimal/balanced then the maximum channel capacity is achieved.

In at least some examples, the UE autonomously and dynamically enables per stream power balancing for spatial multiplexing via optimized beamforming gain for each sub-array configuration simultaneously active.

The UE re-groups antennas according to power across received streams.

The apparatus 10 adjusting the UE Rx antenna pattern to boost/reduce each $h_{ii}$ (diagonal element of channel matrix) according to received power on the dedicated layer $x_i$ (input signals) in order to equalize the corresponding singular values $\lambda_{ii}$ and maximize capacity.

FIG 17 illustrates an example of the apparatus 10. The apparatus illustrates the groups of antenna elements as previously illustrated in FIG 4 and the data streams (layers) as previously illustrated in FIG 6.

The group 70_1 of antenna elements 52 provides beam-formed communication 60_1 with a first directionality and a first polarization that transfers the first data stream 80_1. The group 70_2 of antenna elements 52 provides beam-formed communication 60_2 with the first directionality and a second polarization that transfers the second data stream 80_2.

The group 70_3 of antenna elements 52 provides beam-formed communication 60_3 with a second directionality and a first polarization that transfers the third data stream 80_3. The group 70_4 of antenna elements 52 provides beam-formed communication 60_4 with the second directionality and a second polarization that transfers the fourth data stream 80_1.

The switching arrangement 90, under the control of control signal 92, directs the respective data stream 80_i to the respective group 70_i of antenna elements. The number of antenna elements 52 in a group 70_i can be varied.

The switching arrangement is therefore configured to selectively place the illustrated antenna element in a particular group 70_i by selectively connecting it to the respective data stream 80_i for that group 70_i.

In the example, illustrated, this can be achieved by having a 2 to 1 switch 90 that selectively interconnects any one of the data streams 80_1, 80_3 to an antenna element configured for the first polarization and by having a 2 to 1 switch (not illustrated) that selectively interconnects any one of the data streams 80_2, 80_4 to an antenna element configured for the second polarization.

For clarity of illustration only the switches 90 associated with the antenna elements used for the data stream 80_1, 80_3 and groups 70_1, 70_3 are illustrated.

The spatial filter arrangement 94, under the control of control signal 96, applies a phasor weighting to the signals provided to the antenna elements of a group to control the beam-formed by that group 70_i. In the example, illustrated, this can be achieved by having a phasor weighting circuit that applies, in response to the control signal 96, a controlled gain and a controlled phase delay in the path to/from the antenna element 52. A phasor weighting circuit can be provided by series interconnection of a controlled amplifier and a controlled phase delay circuit.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user.

A user equipment can be a module. The apparatus 10 can be a module.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term "of the" can in context be replaced with "having the". Thus, the meaning of 'a beam of specific directionality' is synonymous with 'a beam having specific directionality'.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, "determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

**1.** An apparatus comprising:

means for obtaining a measured power loss in at least a first channel;
means for, in dependence upon the measured power loss, determining to increase, decrease, or maintain a number of antenna elements used for beam-formed communication via the first channel; and
means for, in dependence upon the determination, changing the number of antenna elements used for beam-formed communication via the first channel.

**2.** An apparatus as claimed in claim 1,
wherein the means for obtaining a measured power loss in at least a first channel comprises:

means for obtaining a measured power loss of at least a channel of a set of four simultaneous multiple-input multiple-output (MIMO) channels, where
a first channel has a first directionality and a first polarization,
a second channel has the first directionality and a second polarization orthogonal to the first polarization,
a third channel has the first polarization and a second directionality different to the first directionality and
a fourth channel has the second polarization and the second directionality,
wherein the four simultaneous channels simultaneously multiplex four data streams as four MIMO layers;
wherein the means for, in dependence upon the measured power loss, determining to increase, decrease, or maintain a number of antenna elements used for beam-formed communication via the first channel comprises:

means for, in dependence upon the measured power loss, determining to redistribute antenna elements of an antenna panel between a set of four groups comprising:

a first group of antenna elements used to form a beam of the first directionality and the first polarization for the first channel,
a second group of antenna elements used to form a beam of the first directionality and the second polarization for the second channel,
a third group of antenna elements used to form a beam of the second directionality and the first polarization for the third channel,
a fourth group of antenna elements used to form a beam of the second directionality and the second polarization for the fourth channel;

and wherein the means for, in dependence upon the determination, changing the number of antenna elements used for beam-formed communication via the first channel comprises:

means for, in dependence upon the determination, redistributing antenna elements of the antenna panel between the set of four groups comprising:

the first group of antenna elements used to form a beam of the first directionality and the first polarization for the first channel,
the second group of antenna elements used to form a beam of the first directionality and the second polarization for the second channel,
the third group of antenna elements used to form a beam of the second directionality and the first polarization for the third channel,
the fourth group of antenna elements used to form a beam of the second directionality and the second polarization for the fourth channel.

3. An apparatus as claimed in any preceding claim,
wherein the means for, in dependence upon the measured power loss, determining to increase, decrease, or maintain a number of antenna elements used for beam-formed communication via the first channel comprises:

means for, in dependence upon the channel measurement, determining to selectively increase the number of antenna elements used for beam-formed communication using at least the first channel to an increased number;
wherein the means for, in dependence upon the determination, changing the number of antenna elements used for beam-formed communication via the first channel comprises:
means for, in dependence upon the determination, selectively increasing the number of antenna elements used for beam-formed communication via the first channel to the increased number.

4. An apparatus as claimed in any preceding claim,
wherein the means for, in dependence upon the measured power loss, determining to increase, decrease, or maintain a number of antenna elements used for beam-formed communication via the first channel comprises:
means for, in dependence upon the channel measurement indicating that the power loss of the first channel exceeds a threshold, determining to increase the number of antenna elements used for beam-formed communication via the first channel.

5. An apparatus as claimed in any preceding claim,
wherein the means for, in dependence upon the determination, changing the number of antenna elements used for beam-formed communication via the first channel comprises:

means for redistribution of antenna elements between at least a group used for beam-formed communication via the first channel and a group used for simultaneous beam-formed communication via at least a second channel,
to maintain communication via at least the first channel and at least the second channel
and/or
to reduce a difference between reception power for the first channel and the second channel.

6. An apparatus as claimed in any preceding claim,
wherein the means for, in dependence upon the determination, changing the number of antenna elements used for beam-formed communication via the first channel comprises:

means for redistribution of antenna elements between N groups used for multiple-input multiple-output (MIMO) beam-formed communication, to maintain the N multiple outputs (MO) for MIMO and/or reduce a maximum difference between reception power for N multiple outputs for MIMO.

7. An apparatus as claimed in any preceding claim,
   wherein the means for, in dependence upon the determination, changing the number of antenna elements used for beam-formed communication via the first channel comprises:

   means for redistribution of antenna elements between at least a group used for beam-formed communication via the first channel and a second group used for beam-formed communication via a second channel,
   wherein one or more antenna elements in the group used for beam-formed communication via the second channel, are removed from that group and used in the group for give simultaneous beam-formed communication via the first channel.

8. An apparatus as claimed in any preceding claim,

   wherein communication power for the first channel increases as a consequence of increasing the number of antenna elements used for beam-forming when communicating using at least the first channel and communication power for the second channel decreases as a consequence of increasing the number of antenna elements used for beam-forming when communicating using at least the first channel.

9. An apparatus as claimed in any preceding claim,

   wherein the first channel is a first downlink channel and the second channel is a second downlink channel, the apparatus comprising:

   means for measuring power loss of the first downlink channel;
   means for measuring power loss of the second downlink channel;

   wherein the means for, in dependence upon the measured power loss, determining to increase, decrease, or maintain a number of antenna elements used for beam-formed communication via the first channel comprises: the means for determining before increasing or decreasing the number of antenna elements used for beam-formed communication via the first channel that reception power of the first downlink channel is less than the reception power of second downlink channel by a threshold value.

10. An apparatus as claimed in claim 9,
    wherein the means for determining an increase or decrease in the number of antenna elements used for beam-formed communication via the first channel reduces a difference between reception power for the first downlink channel and the second downlink channel.

11. An apparatus as claimed in any preceding claim,

    wherein means for changing the number of antenna elements used for beam-formed communication via the first channel is configured to reconfigure a spatial filter provided by a group of antenna elements for beam-formed communication via the first channel, wherein the group of antenna elements does not comprise one or more antenna elements before changing the number of antenna elements used for beam-formed communication via the first channel that it comprises after changing the number of antenna elements used for beam-formed communication via the first channel and/or
    comprising means for changing a number of antenna elements used for beam-formed communication via the second channel configured to reconfigure a spatial filter provided by a group of antenna elements for beam-formed communication via the second channel, wherein the group of antenna elements does comprise one or more antenna elements before changing the number of antenna elements used for beam-formed communication via the first channel that it does not comprise after changing the number of antenna elements used for beam-formed communication via the first channel.

12. An apparatus as claimed in claim 11, wherein reconfiguring the spatial filter changes an angle of beam-forming for first channel, and/or changes an angle of beam-forming for the second channel.

**13.** An apparatus as claimed in any preceding claim, comprising:
means for evaluating the changed number of antenna elements used for beam-formed communication using at least the first channel using a downlink signal.

**14.** A method comprising:

determining, in dependence upon a measured power loss, to increase, decrease, or maintain a number of antenna elements used for beam-formed communication via a first channel; and
in dependence upon the determination, changing the number of antenna elements used for beam-formed communication via the first channel.

**15.** A computer program comprising code that when run by one or more processors, enables

determining, in dependence upon a measured power loss, to increase, decrease, or maintain a number of antenna elements used for beam-formed communication via a first channel; and
in dependence upon the determination, changing the number of antenna elements used for beam-formed communication via the first channel.

Fig. 1

FIG 2

FIG 3A

FIG 3B

FIG 3C

22_1   20_1     30_1          40_1

52
52

ΔP(Ch1)   ΔN_1      ΔN_1

10

20_1        60_1,
            60_2

62
61        64_1
          64_2

FIG 4

20_1        30_1          40_1
                                  70_1
20_2
                                  70_2
20_3
                                  70_3
20_4
                                  70_4

FIG 5

MI   MO  20_1

        20_2

        20_3

        20_4

N   x   M

FIG 6

80          80_1
              80_2
    M         80_3
    U
    X         80_4

FIG 7

FIG 8

FIG 9A

FIG 9B

FIG 10A

FIG 10B

500

502

504

506

506

FIG 11

400

Processor        402

Memory
406        404

FIG 12

406        408

FIG 13

600

```
      602

      604

      606

      608

      610

      612 ──────────────────────
                              614

      620                     616

                              618

      622

      624
```

FIG 14

FIG 15

FIG 16

FIG 17

Europäisches
Patentamt

European
Patent Office

Office européen
des brevets

# EUROPEAN SEARCH REPORT

Application Number

EP 22 18 7966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/412425 A1 (LAGHATE MIHIR VIJAY [US] ET AL) 31 December 2020 (2020-12-31) | 1-4, 11-15 | INV. H04B7/06 H04B7/08 |
| A | * paragraphs [0065], [0066], [0068], [0075] * <br> * figures 5, 6 * | 5-10 | |
| X | US 2017/201892 A1 (WEN RONG [CN] ET AL) 13 July 2017 (2017-07-13) * paragraphs [0093], [0103] - [0110], [0121], [0122], [0172], [0174] * * figures 2, 7, 8, 1012A, 14 * | 1-15 | |
| X | US 11 356 159 B1 (RAGHAVAN VASANTHAN [US] ET AL) 7 June 2022 (2022-06-07) | 1-4, 11-15 | |
| A | * figure 6 * | 5-10 | |
| X | US 2020/044310 A1 (BEN RACHED NIDHAM [FR] ET AL) 6 February 2020 (2020-02-06) | 1-4, 11-15 | |
| A | * paragraphs [0052] - [0056] * * figure 4 * | 5-10 | TECHNICAL FIELDS SEARCHED (IPC) |
| X | US 2012/046001 A1 (INOUE YUKI [JP] ET AL) 23 February 2012 (2012-02-23) | 1-4, 11-15 | H04B |
| A | * paragraphs [0032], [0033], [0040] * * figures 22, 24 * | 5-10 | |

The present search report has been drawn up for all claims

| Place of search | Date of completion of the search | Examiner |
|---|---|---|
| Munich | 11 January 2023 | Franz, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 18 7966

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2023

| Patent document cited in search report | | Publication date | Patent family member(s) | | Publication date |
|---|---|---|---|---|---|
| US 2020412425 | A1 | 31-12-2020 | CN 114258642 A | | 29-03-2022 |
| | | | EP 3991318 A1 | | 04-05-2022 |
| | | | US 2020412425 A1 | | 31-12-2020 |
| | | | WO 2020264449 A1 | | 30-12-2020 |
| US 2017201892 | A1 | 13-07-2017 | EP 3214772 A1 | | 06-09-2017 |
| | | | US 2017201892 A1 | | 13-07-2017 |
| | | | WO 2016065644 A1 | | 06-05-2016 |
| US 11356159 | B1 | 07-06-2022 | US 11356159 B1 | | 07-06-2022 |
| | | | WO 2022236235 A1 | | 10-11-2022 |
| US 2020044310 | A1 | 06-02-2020 | CN 110784251 A | | 11-02-2020 |
| | | | EP 3605873 A1 | | 05-02-2020 |
| | | | US 2020044310 A1 | | 06-02-2020 |
| US 2012046001 | A1 | 23-02-2012 | CN 102427379 A | | 25-04-2012 |
| | | | EP 2421096 A2 | | 22-02-2012 |
| | | | JP 5066234 B2 | | 07-11-2012 |
| | | | JP 2012044408 A | | 01-03-2012 |
| | | | US 2012046001 A1 | | 23-02-2012 |

EPO FORM P0459

For more details about this annex : see Official Journal of the European Patent Office, No. 12/82